# EUROPEAN PATENT APPLICATION

(11) **EP 2 573 772 A1**
(43) Date of publication of application: **27.03.2013**
(21) Application number: 11306203.8
(22) Date of filing: 22.09.2011
(51) Int. Cl.: G11B 27/031, H04N 21/2743, H04W 4/02, G01S 5/00

(54) **Automated real time video mashup editor**

(71) Applicant: Alcatel Lucent, 75007 Paris (FR)
(72) Inventor: Adzo, Kossi, 91620 Nozay (FR); Outtagarts, Abdelkader, 91620 Nozay (FR); Bensaoud, Driss, 91620 Nozay (FR)
(74) Representative: Demulsant, Xavier

(57) **Abstract**

System (**1**) for producing video mashups from media data gathered from one or more distant terminals (**2**) through a communication network, said system (**1**) comprising:
- A camera search engine or CSE (**4**), programmed to determine a geographical location of the terminals (**2**) and retrieve media data streaming from the terminals (**2**).
- A real-time video composer enabler or RTVCE (**6**), programmed to compose at least one video mashup using the media data retrieved from said distant terminal (**2**) by the CSE (**4**).

## Description

### FIELD OF THE INVENTION

The invention relates to video mashup. Mashup is a video editing technique which consists of combining several sources of video, audio, possibly even text, to form a blended - yet original - video content.

### BACKGROUND OF THE INVENTION

The extended use of personal computers has made it possible for most users to create personal videos assembling media elements taken from their own production (such as personal cameras, computers or even smartphones) or downloaded from the Internet.

Two main techniques may be used to create video mashups: PC-based and Web-based.

In the PC-based techniques, users are requested to install a dedicated software or plug-in on their personal computer, which they shall use to create the mashups. Many plug-ins are open-source programs which the users may download from the editors' websites, such as Cinelerra™, Kdenlive™ , Blender™, PiTiVi™, Avidemux™, Jahshaka™.

Many functions are provided, such as downloading/creating a media content, editing the media, cutting/copying/pasting the media, mixing the media with another source, adding transitions, sounds, text, or even preprogrammed effects like fading.

In the Web-based techniques, the functions accessible to the users are the same as in the PC-based techniques, except the mashup programs are not to be downloaded and installed on the users' computers, but are directly accessible for an online use. Jaycut™ and MovieMasher™ are examples of popular online video mashup programs. Those online programs have spread along with the expansion of Web 2.0, allowing for information sharing, interoperability and collaborative work.

US patent application No. US 2011/138354 (IBM) discloses a Web 2.0-based video mashup player widget including a function of dynamically adjusting boundaries of an embedded multimedia application to a native size of a video file.

Editors have made efforts to provide the users with simplicity and interactivity. However, few efforts were made to provide automation: in the programs cited hereinbefore, most functions are user-activated.

Yet proposals were made to automate video content creation, cf. X.-S. Hua, L.Lu, H.-J. Zhang, "AVE - Automated Home Video Editing", ACM Multimedia 2003, Nov. 2-8, Berkeley, USA, presenting a system that aims at automating home video editing. According to the paper, the system automatically extracts a set of highlight segments from a set of raw home videos and aligns them with user supplied incidental music based on the content of the video and incidental music. Three stages are disclosed in the System Overview chapter. The first stage is content analysis, consisting of video temporal structure parsing, attention detection, sentence detection in the audio track of the original video, and beat/tempo detection in the music. The second stage is content selection (including boundary alignment), which selects a particular set of "important" and informative video segments that match motion with tempo, as well as shot boundaries with sentences in the audio track and music beats. (...) The last stage is composition, which renders selected video segments with music by adding appropriate transitions between the selected video segments.

Despite the theoretical work achieved, and the recent developments in Web 2.0, only few automated online video mashup programs are available, cf. e.g. Animoto™, which proposes a part-automated post-production slideshow video editor. Users are still requested to annotate the videos and the system is monosource, i.e. the gathered media may only come from one source, i.e. one computer.

There is still a need for a video mashup system allowing for automated online real-time video creation.

It is therefore an object of the present invention to provide an enhanced video producing system.

It is another object of the present invention to provide an enhanced online video producing system.

It is another object of the present invention to provide a real-time video producing system.

It is yet another object of the present invention to provide a user-friendly automated video producing system.

It is another object of the present invention to provide an automated multisource video mashup producing system, i.e. an automated system capable of producing video mashups using media coming from various sources.

### SUMMARY OF THE INVENTION

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key of critical elements of the invention or to delineate the scope of the invention. Its sole purpose is to present some concepts in a simplified form as a prelude to the more detailed description that is discussed later.

It is therefore provided, according to a first aspect, a system for producing video mashups from media data gathered from one or more distant terminals through a communication network, said system comprising:
- a camera search engine or CSE, programmed to determine a geographical location of the terminals and retrieve media data streaming from the terminals.
- a real-time video composer enabler or RTVCE, programmed to compose at least one video mashup using the media data retrieved from said distant terminal by the CSE.

The RTVCE may further comprise:
- a video editing composer engine, programmed to perform real time video composition applying predefined rules;
- a meta data analyzer module, programmed to analyze data provided by a terminal and automatically generate meta data to be added to the video mashup;
- a meta data adding module, programmed to add the meta data produced by the meta data analyzer to the video mashup.

The RTVCE may further comprise:
- a collaborative module, programmed to define collaborative groups of terminals authorized to share video mashups;
- a media access control module, programmed to verify the user or terminal authorizations to access shared shots or sequences to be merged within a video mashup;

The RTVCE may further comprise:
- a subscribe module programmed to authorize access to mashup videos produced by the video editing composer engine by authorized terminals, or to deny such access to non-authorized terminals;
- a mashup sharing module, programmed to share the video mashup within the collaborative group(s) of terminals;
- a mashup publishing module, programmed to publish a draft video mashup composed by the video editing composer engine for validation by terminals via the publishing video mashup validation module.

The RTVCE may further comprise:
- a notification module, programmed to notify users/terminals of any modification made to a shared video mashup;
- A mashup locking/merging module, programmed to merge video mashups, and to lock a mashup for releasing;
- a mashup releasing module, programmed to create a ready-to-publish mashup video, based upon the mashup video produced by the video editing composer engine.

In one preferred embodiment, the system further includes a shared video mobile application or SVMA, which comprises:
- a SVMA launcher module, programmed to identify the URL of a media production device embedded within the terminal and connect it to the CSE;
- a communication interface, programmed to connect to the CSE and stream media data to the CSE from the terminal, using a real-time protocol.

The SVMA may further include a publishing module, programmed to publish/withdraw information regarding the terminal within/from the CSE.

The SVMA may further include a video mashup validation module, programmed to:
o receive URL of already produced video mashups;
o share the video mashup with other authorized terminals.

It is provided, according to a second aspect, a computer program implemented on a processing unit of a terminal, said program including instructions for performing the functions of the SVMA.

While the invention is susceptible to various modification and alternative forms, specific embodiments thereof have been shown by way of example in the drawings. It should be understood, however, that the description herein of specific embodiments is not intended to limit the invention to the particular forms disclosed.

It may of course be appreciated that in the development of any such actual embodiments, implementation-specific decisions should be made to achieve the developer's specific goal, such as compliance with system-related and business-related constraints. It will be appreciated that such a development effort might be time consuming but may nevertheless be a routine understanding for those or ordinary skill in the art having the benefit of this disclosure.

### BRIEF DESCRIPTION OF THE DRAWINGS

The objects, advantages and other features of the present invention will become more apparent from the following disclosure and claims. The following non-restrictive description of preferred embodiments is given for the purpose of exemplification only with reference to the accompanying drawings in which:
**FIG.1** is a schematic diagram showing a network architecture allowing for online real-time video edition.
**FIG.2** is a schematic diagram showing the internal architecture of a Real-time Video Composer Enabler.

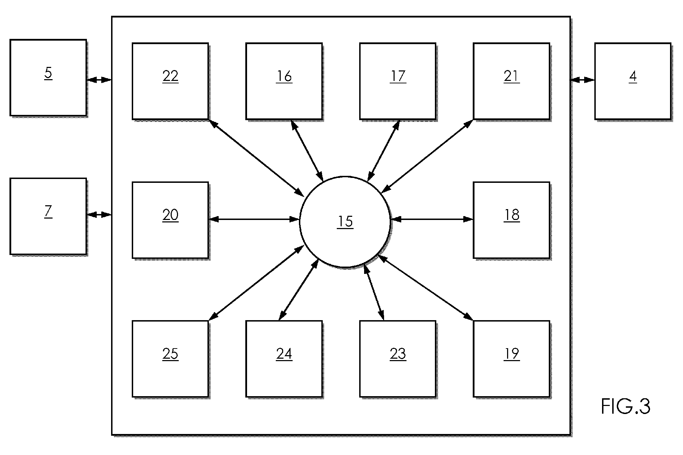

**FIG.3** is a schematic diagram of a shared video mobile plug-in implemented in a CPU of a Smartphone.

### DETAILED DESCRIPTION OF ILLUSTRATIVE EMBODIMENTS

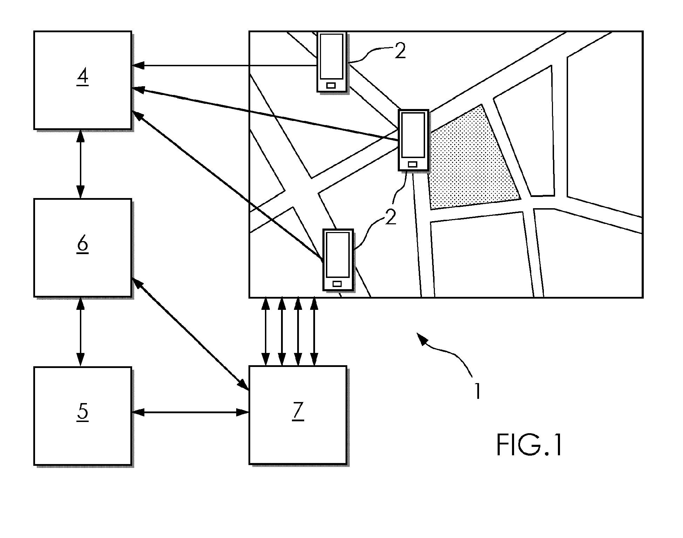

**FIG.1** shows the architecture of a network system 1 designed for allowing online real-time video edition.

More specifically, the system **1** runs the following main operations:
- gathering media data from a plurality of distant end user equipments or terminals **2** (e.g. Smartphones) equipped with media production hardware and/or software, at least one of the terminals being equipped with a video production hardware (i.e. a camera);
- producing a shared mashup video using the gathered media data, in an automated fashion and in real time, i.e. instantly after having gathered the media data.

As depicted on **FIG.1****,** the system **1** includes several servers, which may be physical servers interconnected through a communication network (LAN, MAN or WAN), or application servers (also called server modules). Servers may use a common communication protocol (such as the Internet Protocol or IP).

In the following description, it is assumed the servers are server application modules and are therefore simply called "modules".

The system **1** includes the following modules:
- a shared video mobile application (SVMA) **3**, preferably under the form of a software application or plug-in implemented in each of the CPU units of the terminals **2**,
- a camera search engine (CSE) **4**,
- a context and rules service (CRS) provider **5**.
- a real-time video composer enabler (RTVCE) **6**,
- a video mashup validation service (VMVS) provider **7**.

Basically, the system **1** is designed to achieve the following general operations, once the end user has configured and started the SVMA 3 from his terminal **2**:
- publishing the terminal URL (uniform resource locator) with the CSE **4**;
- notifying the terminal URL to the RTVCE **6**;
- composing a video mashup from video shots or images gathered from different terminals **2**, applying predefined rules and context criteria, as provided by the CRS **5**.

The SVMA **3** will now be disclosed.

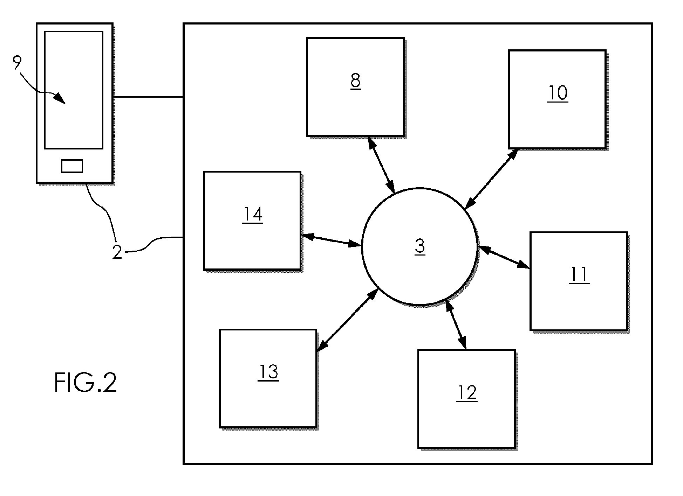

As depicted on **FIG.2**, the SVMA **3** comprises the following interconnected modules:
- a configuration module **8**, accessible to the end user via a user interface **9** of the terminal **2** including a display and a keyboard (real or virtual), and programmed to conduct the following operations:
   o setting a login and password to authorize restricted access of the terminal **2** to the CSE **4** through a communication network (e.g. the Internet);
   o possibly setting a communication port of the CSE **4**;
   o setting quality and resolution of video and images produced within the terminal **2**, e.g. via an embedded camera, or relayed by the terminal **2** (such as videos and images downloaded from the terminal **2** and memorized within the terminal **2**);
   o possibly setting quality and resolution of audio signals produced/relayed by the terminal **2**;
   o creating/editing contextual text messages to be subsequently used as comments embedded within the videos or images. The contextual text messages, preferably inputted by the user, may refer to his environmental context;
- a rule manager module **10**, programmed to allow the user, via the user interface **9**, to:
   o create and manage rules to allow or deny access of the CSE **4** to the embedded camera;
   o create rules within a social network to which the terminal **2** is connected;
   o add general context information regarding the event disclosed in a video/image;
- a SVMA launcher module **11**, programmed to identify the URL of the embedded camera and connect it to the CSE **4** applying the rules defined within the rule manager module **10**;
- a communication interface **12**, programmed to connect to the CSE **4** and stream media (video/images/text) data to the CSE **4** from the terminal **2**, using a real-time protocol such as RTSP (real time streaming Protocol);
- a publishing module **13**, programmed to publish/withdraw information regarding the terminal **2** within/from the CSE **4**, thereby allowing access to the videos/images by connected users and by the connected RTVCE **6**, in order for the user and the RTVCE 6 to retrieve the streamed media data; information may include:
   o geographical location data of the terminal **2** (e.g. latitude and longitude), as provided by a location system such as a GPS system embedded within the terminal **2**;
   o camera data, including e.g. the type and brand of the camera;
   o contextual data, such as a current context of the terminal environment;
   o information regarding the end user, such as the user's name, the terminal phone number, and possibly predefined comments added by the user;
   o a status (busy/connected/absent/in vacation, etc.) of the terminal **2** or the user, such as predefined by the user;
- a video mashup validation module **14**, programmed to:
   o receive URL of already produced video mashups;
   o possibly allow modifications to the video mashup;
   o share the video mashup with other authorized users/terminals, preferably within a predefined community of users/terminals, such as a social network community;

The SVMA **3** is preferably under the form of a computer program implemented on a processing unit (CPU) of the terminal **2**, the program including code sections for performing the instructions corresponding to the different modules of the SVMA **3**, as disclosed hereabove.

The CSE **4** is programmed to:
- determine and provide in real time, i.e. with a delay lower than 100 ms, the geographical location of terminals **2** (e.g. via GPS);
- extract in real time from the terminal explicit meta data generally added by the users, or generate implicit meta data;
- retrieve media data streaming from the terminals **2**.

The CSE **4** is also programmed to allow other SVMA 3 to:
- retrieve information regarding availability of the terminal camera and the geographical location of the terminal **2**;
- dynamically publish information regarding availability of the terminal **2** on the network and the readiness to receive requests, and geographical location (e.g. via GPS).

The CRS **5** is programmed to store rules and contextual data as defined by the users and memorized within the rule manager module **10** and the publishing module **13** of each terminal **2**. The rules and contextual data are either provided to the CRS **5** by the terminal **2**, or automatically retrieved within the rule manager module 10 and publishing module **13** by the CRS **5**, connected to the terminal **2** through the communication network.

The RTVCE **6** is programmed to compose at least one video mashup using media data (video, image, audio, text) retrieved and gathered from one or more terminals **2** by the CSE **4** as disclosed hereabove, according to rules and context data provided by the CRS **5**.

The RTVCE **6** includes the following interconnected modules:
- a video editing composer engine **15**, programmed to perform real time (instant) video composition applying rules and using context data provided by the CRS **5**;
- a meta data analyzer module **16**, programmed to analyze data provided by a user/terminal and automatically generate meta data to be added to the video mashup;
- a meta data adding module **17**, programmed to add the meta data produced by the meta data analyzer **16** to the video mashup;
- a collaborative module **18**, programmed to define collaborative groups of users/terminals authorized to share video mashups;
- a media access control module **19**, programmed to verify the user/terminal authorizations to access the shared shots or sequences to be merged within a video mashup;
- a subscribe module **20** programmed to authorize access to mashup videos produced by the video editing composer engine **15** by authorized users/terminals, or to deny such access to non-authorized users/terminals;
- a mashup sharing module **21**, programmed to share the video mashup within the collaborative group(s) of users/terminals;
- a mashup publishing module **22**, programmed to publish a draft video mashup composed by the video editing composer engine **15** for validation by end users within the terminals **2** via the publishing video mashup validation module **14**;
- a notification module **23**, programmed to notify users/terminals of any modification made to a shared video mashup;
- A mashup locking/merging module **24**, programmed to merge video mashups, and to lock a mashup for releasing, thereby preventing any further modification;
- a mashup releasing module **25**, programmed to create a ready-to-publish mashup video, based upon the mashup video produced by the video editing composer engine **15** and possibly validated/modified by the users/terminals via the mashup publishing module **13**, according to publishing rules, e.g.:
   o a predefined number of amendments added to the video mashup,
   o a predefined number of users/terminals which have contributed to the creation of the video mashup,
   o size of the video mashup,
   o video mashup duration,
   o life expectancy of the video mashup, i.e. duration of the user sharing before destruction/archiving of the video mashup.

The VMVS **7** is programmed to provide the users/terminals with a video mashup validation process, applying rules and contextual information provided by the CRS **5** as well as publishing rules including:
- respect of predefined confidentiality criteria or policies;
- checking of the social link of identified users,
- respect of privacy of individuals present in the videos, even if those individuals are not users,
- video mashup life expectancy.

The system **1** makes it possible to create rich and quick video mashups whichever in any location and time. The end user only has to take or gather shots/images to be used by the system to produce a video mashup in a real-time and automated fashion, once rules and parameters have been set.

## Claims

1. System (**1**) for producing video mashups from media data gathered from one or more distant terminals (**2**) through a communication network, said system (**1**) comprising:
- a camera search engine or CSE (**4**), programmed to determine a geographical location of the terminals (**2**) and retrieve media data streaming from the terminals (**2**).
- a real-time video composer enabler or RTVCE (**6**), programmed to compose at least one video mashup using the media data retrieved from said distant terminal (**2**) by the CSE (**4**).

2. System (**1**) according to claim 1, wherein the RTVCE (**6**) comprises:
- a video editing composer engine (**15**), programmed to perform real time video composition applying predefined rules;
- a meta data analyzer module (**16**), programmed to analyze data provided by a terminal and automatically generate meta data to be added to the video mashup;
- a meta data adding module (**17**), programmed to add the meta data produced by the meta data analyzer (**16**) to the video mashup.

3. System (1) according to claim 2, wherein the RTVCE further comprises:
- a collaborative module (**18**), programmed to define collaborative groups of terminals (**2**) authorized to share video mashups;
- a media access control module (**19**), programmed to verify the user or terminal authorizations to access shared shots or sequences to be merged within a video mashup;

4. System (1) according to claim 3, wherein the RTVCE further comprises:
- a subscribe module (**20**) programmed to authorize access to mashup videos produced by the video editing composer engine (**15**) by authorized terminals (**2**), or to deny such access to non-authorized terminals (**2**);
- a mashup sharing module (**21**), programmed to share the video mashup within the collaborative group(s) of terminals;
- a mashup publishing module (**22**), programmed to publish a draft video mashup composed by the video editing composer engine (**15**) for validation by terminals (**2**) via the publishing video mashup validation module (**14**).

5. System (**1**) according to claim 4, wherein the RTVCE further comprises:
- a notification module (**23**), programmed to notify users/terminals of any modification made to a shared video mashup;
- a mashup locking/merging module (**24**), programmed to merge video mashups, and to lock a mashup for releasing;
- a mashup releasing module (**25**), programmed to create a ready-to-publish mashup video, based upon the mashup video produced by the video editing composer engine (**15**).

6. System (**1**) according to any of the preceding claims, further including a shared video mobile application or SVMA (**3**), comprising:
- a SVMA launcher module (**11**), programmed to identify the URL of a media production device embedded within the terminal and connect it to the CSE;
- a communication interface (**12**), programmed to connect to the CSE and stream media data to the CSE (**4**) from the terminal, using a real-time protocol.

7. System (**1**) according to claim 6, wherein the SVMA further includes a publishing module (**13**), programmed to publish/withdraw information regarding the terminal (**2**) within/from the CSE (**4**).

8. System (**1**) according to claim 7, wherein the SVMA (**3**) further includes a video mashup validation module (**14**), programmed to:
o receive URL of already produced video mashups;
o share the video mashup with other authorized terminals.

9. Computer program implemented on a processing unit of a terminal, said program including instructions for performing the functions of a SVMA (**3**) in a system (**1**) according to any of claims 6-8.
